# EUROPEAN PATENT APPLICATION

(11) **EP 1 724 571 A1**
(43) Date of publication of application: **22.11.2006**
(21) Application number: 05720579.1
(22) Date of filing: 11.03.2005
(51) Int. Cl.: G01N 23/227

(54) **PHOTOELECTRON MEASURING DEVICE**

(30) Priority: 12.03.2004 JP 2004070841
(71) Applicant: RIKEN KEIKI CO., LTD., Tokyo 174-0051 (JP)
(72) Inventor: NAKAJIMA, Yoshiyuki, Riken Keiki Co., Ltd., Tokyo 1740051 (JP); YAMASHITA, Daisuke, Riken Keiki Co., Ltd., Tokyo 1740051 (JP)
(74) Representative: Haley, Stephen
(86) International application number: PCT/JP2005/004308
(87) International publication number: WO 2005/088284

(57) **Abstract**

To provide a photoelectron measuring device that enables handling of samples in the atmosphere.

A photoelectron measuring device that emits ultraviolet light from an ultraviolet light generating source 1 onto a sample S while changing the wavelength and detects the wavelength at which photoelectrons start to be discharged from the sample S, with the section up to an emission outlet 2 being housed in a non-oxygen environment and a sample stand 4 being disposed so that the distance from the emission outlet 2 to the sample S is 7 mm or less.

## Description

The present invention relates to a photoelectron measuring device that emits ultraviolet light onto a sample and measures photoelectrons discharged from the sample.

Measurement of the work function of a solid surface that is exposed to the atmosphere, exoelectrons, the thickness of oxide film on the surface of metal and semiconductors, and the thickness of a lubricating oil film applied to a magnetic disk and the like is performed by measuring the threshold energy (wavelength) at which the emission of photoelectrons from the sample begins and the number of photoelectrons emitted using an ultraviolet emitting device provided with an ultraviolet light generating source having a bandwidth and where necessary a wavelength selection means.

However, ultraviolet light with energy that exceeds 6.2eV, that is, short-wavelength ultraviolet light, is absorbed by oxygen molecules in the air. Therefore, when a material that emits photoelectrons by such high energy ultraviolet light is employed as a sample, the problem arises that it cannot be handled in the atmosphere, and so special equipment or a device such as, for example, a nitrogen gas-filled environment chamber becomes necessary.

The present invention was achieved in view of the above circumstances, and has as its object to provide a photoelectron measuring device that can emit ultraviolet light of an energy of 6.2 eV or greater under an atmospheric environment.

In order to solve the aforementioned problem, the present invention emits ultraviolet light from an ultraviolet light generating source onto a sample placed in the atmosphere and measures the photoelectrons released from the sample.

The present invention can measure the emission of photoelectrons from a sample placed in the atmosphere, and so the sample exchange operation is simplified.

**In the Drawings**
Fig. 1 is a lineblock diagram showing one embodiment of the photoelectron measuring device of the present invention.
Fig. 2 is a line graph showing the relation between the optical path length and the attenuation factor of high-energy ultraviolet light in the atmosphere.
Fig. 3 (A) is a line graph showing the measurement result of photoelectron emission characteristics of the present invention, while Fig. 3(B) is a line graph showing the measurement result of conventional photoelectron emission characteristics.
Fig. 4(A) to Fig. 4(D) are line graphs showing the relation between the wavelength of emitted ultraviolet light and the observed values and theoretical values (computed values) of the present invention when CuPc, NiPc, FcPc, and H2Pc are used as samples, respectively.
Fig. 5 is a drawing showing vignetting that occurs when a convex lens is used in a condensing optical system.
Fig. 6 is a drawing showing another embodiment of the present invention.

1 ultraviolet light generating device, 2 emission outlet, 3 case, 4 sample stand, 5 low-speed electron detection means, 11 concave mirror, S sample

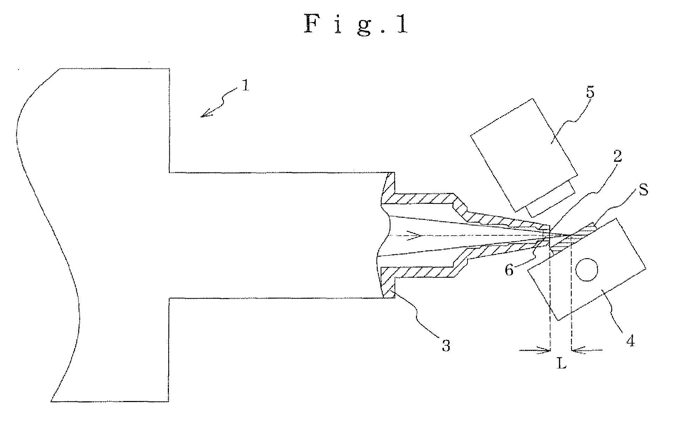

Fig. 1 shows one embodiment of a photoelectron measuring device of the present invention. An ultraviolet light generating device 1 is a general-purpose high-energy ultraviolet light emitting device that is commercially available. It is basically constituted by a case 3 provided with an emission outlet 2 that contains a white ultraviolet light lamp, a grating means, and a condensing means in a nitrogen substitution environment or vacuum environment, and can produce ultraviolet light of a specified wavelength from the emission outlet 2 by operation of the grating means from an outside source.

A sample stand 4 is disposed at a position that can maintain a distance L between the emission outlet 2 of the ultraviolet light generating device 1 and the irradiation region of a sample S of 7 mm or less. A low-speed electron detection means that measures low-speed electrons emitted from the sample is disposed facing the sample stand 4. Reference numeral 6 in the drawing denotes a window consisting of an ultraviolet light permeable material that is disposed on the end portion of the emission outlet 2 of the ultraviolet light emitting device.

The low-speed electron detection means is preferably one that can be disposed as near as possible to the sample. For example, as disclosed in Japanese Unexamined Patent Application No.H09-211137, it is possible to use a detector having a multiplication operation by generating an electric discharge from incident photoelectrons, and a means that disposes a detection electrode over the sample and measures infinitesimal current flowing between the detection electrode and the sample.

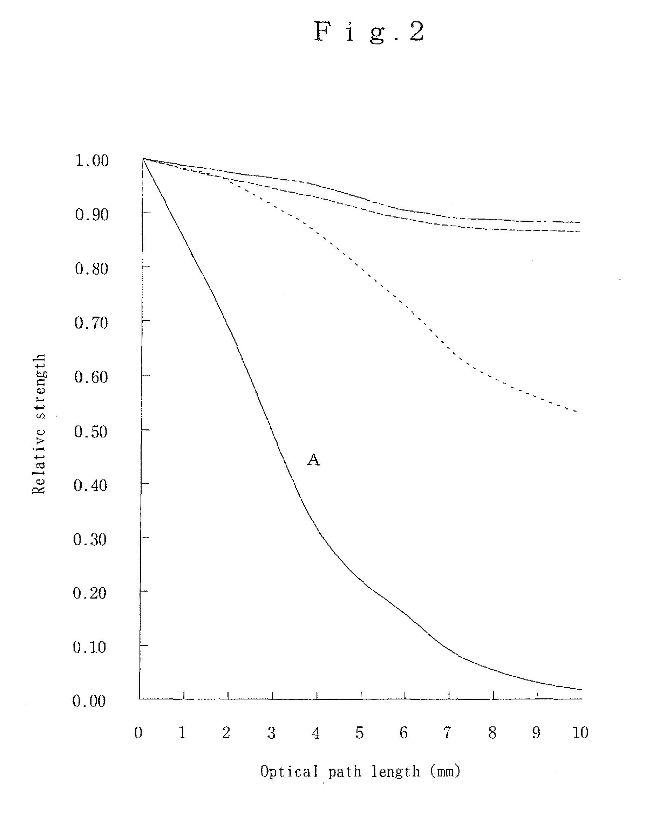

In the embodiment, an ultraviolet ray of 6.2 eV or greater from the emission outlet 2 of the ultraviolet light generating device 1 is absorbed by oxygen molecules in the atmosphere to rapidly attenuate with distance, as shown by the curve A in Fig. 2. However, in experiments conducted by the present inventors, it was discovered that, for example, when ultraviolet light attenuation in the atmosphere is great, with a distance in the atmosphere of 7 mm, an intensity is maintained sufficient for making the sample discharge photoelectrons.

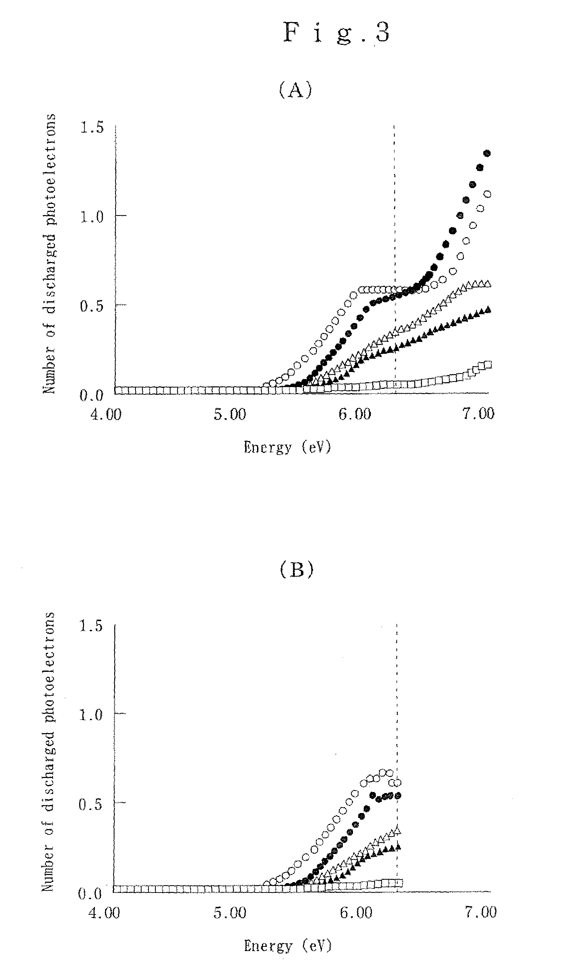

Meanwhile, when an ultraviolet ray of 6.2 eV or greater is emitted in this manner, the photoelectron discharge characteristics of the material can be observed in greater detail as shown in Fig. 3(A). In the graph, the symbol ○ denotes the photoelectron discharge characteristics of copper phthalocyanine (CuPc), ● that of nickel phthalocyanine, Δ that of iron phthalocyanine, ▲ that of hydrogen phthalocyanine, and □ that of cobalt phthalocyanine (the horizontal axis representing the ultraviolet light energy, and the vertical axis representing the number of discharged photoelectrons).

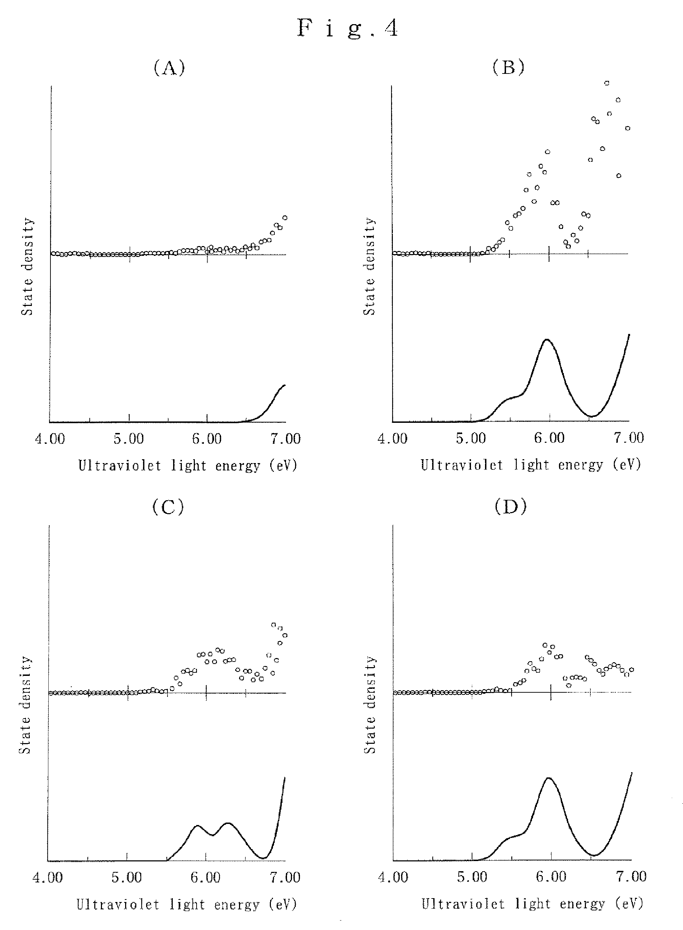

Moreover, the capability of thus measuring photoelectrons by emitting ultraviolet light of 6.2 eV or greater, in practical terms 7 eV, on a sample means the state density of elections can be determined by differentiating the photoelectron discharge characteristics by the wavelength, whereas previously only the theoretical value could be confirmed. In Figs. 4(A) to 4(D), the theoretical value, or calculated value, is shown by the solid line in the lower tier.

In other words, in Figs. 4(A) to 4(D), the graph in the upper tier formed by circles depicts the state density of electrons actually measured. This invention can therefore contribute greatly to the development of new materials and confirmation of the characteristics of new materials.

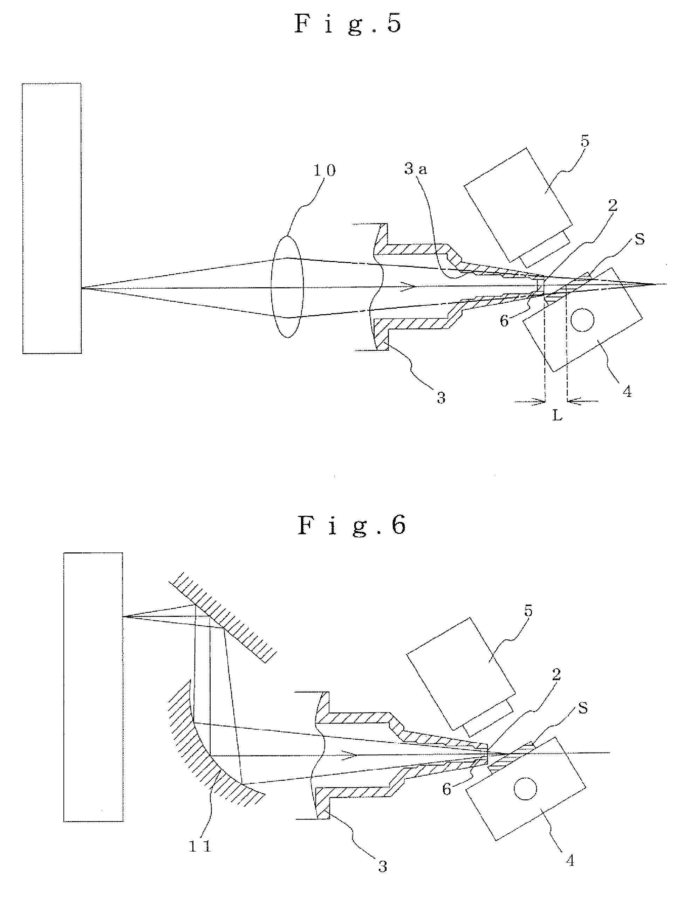

When a convex lens 10 is used as a preceding condensing optical system for the emission outlet 2 of the ultraviolet light generating device, since light of a longer wavelength than the design wavelength has a longer focal length, vignetting (as shown by the dashed dotted line in FIG. 5) occurs due to a wall 3 a at the distal end portion of the case 3. This leads to problems such as a reduction in the amount of light that can be emitted on the sample S as well as a change in the irradiation area, the so-called irradiation spot, on the sample S.

Fig. 6 shows the second embodiment for resolving these problems. In this embodiment, a reflective optical element, i.e., a concave mirror 11, is disposed as the condensing optical system preceding the emission outlet 2.

Using the concave mirror 11 can eliminate vignetting caused by wavelength changes, and significantly reduce changes in the amount of light that reaches the sample S and fluctuations in the irradiation area to the sample. It is also possible to expand the range of wavelengths used for measurement and enlarge the distance between the emission outlet 2 and the irradiation surface of the sample S to approximately 15 mm.

Since the present invention enables the handling of samples in the atmosphere, it is extremely useful by allowing samples subject to measurement to be readily exchanged, and being applicable to quality inspection of products at manufacturing premises.

## Claims

1. A photoelectron measuring device that emits ultraviolet light from an ultraviolet light generating source onto a sample placed in the atmosphere and measures the photoelectrons discharged from said sample.

2. A photoelectron measuring device according to claim 1, wherein the wavelength of said ultraviolet light and the point in time at which photoelectrons start to be discharged are detected.

3. A photoelectron measuring device according to claim 1, housing the section from said ultraviolet light generating source to an ultraviolet light emission outlet in a non-oxygen environment, and having a sample stand disposed so that the distance between said emission outlet and the surface of said sample is 15 mm or less.

4. A photoelectron measuring device according to claim 1, having a condensing optical element consisting of a concave mirror disposed preceding an emission outlet.

5. A photoelectron measuring device according to claim 1, having a means to select the wavelength of the ultraviolet light from said ultraviolet light generating source.
